(19)

Europäisches
Patentamt
European
Patent Office
Office européen
des brevets

(11) **EP 4 553 593 A2**

(12) **EUROPEAN PATENT APPLICATION**

(43) Date of publication:
14.05.2025 Bulletin 2025/20

(21) Application number: 24207667.7

(22) Date of filing: 19.10.2024

(51) International Patent Classification (IPC):
*G05B 19/05* (2006.01)   *H04L 12/40* (2006.01)

(52) Cooperative Patent Classification (CPC):
H04L 12/40032; G05B 19/054; H04L 12/40019;
H04L 67/125; H04L 2012/40208

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.11.2023 DE 102023131514**

(71) Applicant: **TEConcept GmbH
79106 Freiburg im Breisgau (DE)**

(72) Inventor: **Witte, Franz-Otto
79341 Kenzingen (DE)**

(74) Representative: **Bösherz Goebel Patentanwälte
Rheinberger Weg 6
40670 Meerbusch (DE)**

(54) **APPARATUS FOR CONNECTING AT LEAST TWO SECONDARY DEVICES TO ONE PORT OF A MASTER**

(57)    The invention relates to an apparatus (3) for connecting at least two secondary devices (8a-d) to one port (7a) of a master device (7), the apparatus (3) being configured as an IO-Link-capable-device for being interposed between the secondary devices (8a-d), each configured as an IO-Link device, and the master device (7), configured as an IO-Link master.

Figure 2

EP 4 553 593 A2

## Description

The present invention relates to an apparatus for connecting at least two secondary devices to one port of a master device. Furthermore, the invention relates to a system, a method, a computer program, a data processing apparatus as well as a computer-readable storage medium.

State of the art

IO-Link is a communication protocol that is standardized in IEC 61131-9. It is typically used in industrial fieldbus environments to connect sensors or actuators with various fieldbus systems. Special linking devices called IO-Link masters are used to connect IO-Link devices to various fieldbus systems. The IO-Link communication is based on a simple point-to-point protocol. Thus, IO-Link devices only need to support a single, simple interface and can still interact with a variety of host systems via a suitable IO-Link master. IO-Link masters do not only exist for fieldbuses, but also for other client systems like web browsers, MQTT Servers, artificial intelligence cloud systems as well as other IT-based technologies like OPC UA or

JSON.

Information that is transferred over IO-Link is based on telegrams that are called m-sequences. An m-sequence is always initiated by an IO-Link master with a first part at predefined periods or cycles and answered by the IO-Link Device answers with a second part. M-sequences contain data elements that are transferred in every cycle. These data elements are called cyclic data or process data. They also contain elements that are typically spread over multiple cycles. These elements are transferred only on request - that's why they are called on-request or acyclic data. On-request data are for example used for parameters or event messages.

Different m-sequence types are used to specify different fixed sized data elements. Which m-sequence types are used during the IO-Link communication is defined by the IO-Link devices. An IO-Link master with for example 8 IO-Link ports allows the connection of up to 8 IO-Link devices. The features of the connected IO-Link devices are described in electronic data sheets called IO-Link Device Descriptor "IODD" files. Every IO-Link device type is uniquely identified by an address consisting of a 16-bit Vendor ID and a 24-bit Device ID.

This identification is listed in the IODD and can in addition read out via the IO-Link protocol from the IO-Link device.

The current IO-Link system is very successful and is widely used, especially in combination with fieldbus systems and programmable logic controllers 'PLCs'.

There are various disadvantages associated with the use of communication systems, particularly IO-Link. This includes, for example, the case of a lack of master ports. This occurs when additional sensors or actuators need to be added for extended or improved functionality, and all ports of the current master are already in use, and adding a new master is difficult or not possible. Another disadvantage arises when a given device needs to be replaced by a similar one with similar or comparable features but a different cyclic data structure.

It is another challenge to provide low latency feedback from a sensor to an actuator without using PLCs as clients. It can be also challenging to implement simple sequencing as an extension to the low latency feedback, which includes execution loops and decisions. It is another challenge to meet the requirements of clients who need data in a specific, preprocessed data format that is not provided by the connected IO-Link Device.

Existing solutions are devices like the "Balluf BNI IOL-302-002-K006" allow to extend an IO-Link device with an extender port. However, these solutions are not generic, as only specific devices can be connected to the extender port.

Disclosure of the invention

According to aspects of the invention an apparatus with the features of claim 1, a system with the features of claim 8, a method with the features of claim 9, a computer program with the features of claim 16, a data processing apparatus with the features of claim 17 as well as a computer-readable storage medium with the features of claim 18 are provided. Further features and details of the invention are disclosed in the respective dependent claims, the description, and the drawings. Features and details described in the context to the apparatus according to the invention also correspond to the system according to the invention, the method according to the invention, the computer program according to the invention, the data processing apparatus according to the invention as well as the computer-readable storage medium according to the invention, and vice versa in each case.

According to an aspect of the invention, an apparatus for connecting at least two secondary devices to one, particularly single, port of a master device is provided. The apparatus may be configured as an IO-Link-capable-device for being interposed between the secondary devices, each configured as an IO-Link device, and the master device, configured as an IO-Link master. Therefore, the apparatus may be used in a typical application of IO-Link, where the master device is used as an interface to a fieldbus and a programmable logic controller (PLC) to forward control data from the PLC and the fieldbus to the secondary devices and/or to forward sensor data from the secondary devices via the fieldbus to the PLC. Of course, further applications are conceivable, as the connection of the secondary devices via the master device to any kind of upper-level unit.

The apparatus may comprise a device port, configured to connect to the one port of the master device, particularly by wire. Furthermore, the apparatus may comprise at least two master ports, configured to connect to the secondary devices, particularly by wire. The apparatus may also comprise a processing unit, particularly electronic processing unit, configured to establish a data communication with the master device via the device port and via the one port. The processing unit may also be configured to establish a (another) data communication with the secondary devices via the at least two master ports. The processing unit thereby allows to provide an exchange of data between the secondary devices and the master device via the apparatus. Each data communication may be configured as a point-to-point communication, as particularly specified by IO-Link. In addition, the processing unit may be configured to adjust, preferably aggregate, the data exchanged with the secondary devices for the point-to-point communication with the master device via the device port and via the one port. Also, since the data may be exchanged in both directions, the apparatus and particularly the processing unit may be configured to receive accumulated data from the master device to process (e.g., calculate or split) it and send it to the individual secondary devices. As a result of these possibilities the apparatus has the advantage to allow a more flexible integration and usage of secondary devices for different applications.

The master device may provide a communication system like IO-Link for the data exchange with the secondary devices. A communication system may refer to a digital communication network that allows for real-time data exchange between the secondary devices in the form of industrial devices such as sensors, actuators, and controllers. It can for example be used to connect devices in a manufacturing or process control environment, allowing for efficient and reliable communication between devices. The communication system may be configured as a point-to-point communication system and thereby distinguishes itself from fieldbus systems. To this end, particularly IO-Link uses an IO-Link master to connect (point-to-point) to one or more IO-Link devices, i.e., Sensors or Actuators. The IO-Link master may provide the interface to an upper-level unit like the higher-level controller (PLC) and controls the communication with the connected IO-Link devices. An IO-Link master may have one or more IO-Link ports to which only one device can be connected at a time. This can also be a "hub" which, as a concentrator, enables the connection of classic switching sensors and actuators.

Furthermore, the communication system may be configured as a wired communication system. In contrast to a wireless solution, the communication system may therefore use cables to establish the physical connection between ports of the master and the devices.

Usually, a (primary) master device is used to interface between various fieldbus- or similar systems and multiple (secondary) devices. The master may be responsible for controlling the, particularly IO-Link, communication with the secondary devices, including the transmission of data, configuration, and parameterization. Optionally, the master may also provide power to the secondary devices, enabling a simplified and cost-effective wiring. The master may also be active peer connected through ports to one up to n (secondary) devices and provide an interface to the gateway to the upper-level communication systems or upper-level units like PLCs (Programmable logic controller).

IO-Link particularly refers to a standardized communication protocol that is standardized in IEC 61131-9 and used to connect sensors and actuators to industrial automation systems. It may enable bi-directional communication between devices and the control system, allowing for real-time data exchange and parameterization. IO-Link is supported by a wide range of industrial equipment suppliers. This makes it a cost-effective and flexible solution for industrial automation applications.

An MCU (short for microcontroller unit) may be used to execute software, i.e., at least one computer program, particularly computer program according to the invention, and/or referred to as application. The MCU may comprise a processor, memory, and input/output peripherals. The application may realize a Standard Master Interface (SMI) for the upper-level communication and an IO-Link master interface for communication with the devices. Information that is transferred over IO-Link may be based on telegrams that are called m-sequences. An m-sequence may always be initiated by an IO-Link master with a first part at predefined periods or cycles and answered by the IO-Link Device answers with a second part. M-sequences may contain data elements that are transferred in every cycle. These data elements are called cyclic data or process data. They also contain elements that are typically spread over multiple cycles. These elements may be transferred only on request - that's why they are called on-request or acyclic data. On-request data are for example used for parameters or event messages. The processing unit of the apparatus according to the invention may also be configured as (another) MCU.

Different m-sequence types may be used to specify different fixed sized data elements. Preferably, which m-sequence types are used during the IO-Link communication is defined by the IO-Link devices. If an IO-Link master sends process data "PD" to an (secondary) device, these data may be called in the IO-Link interface and system specification PDOut. If an IO-Link Master receives PD these data may be called PDIn. The total size of the Process data for an IO-Link Device is particularly limited to 32-bytes PDOut and 32-bytes PDIn. If the direction of the data flow is not important for a consideration, the suffices In/Out can be skipped in the subsequent description.

A PHY may be provided that is particularly a specific electrical circuit that is connected to the MCU. It modifies the electrical characteristics of MCU-signal into signals that are in conformity with the physical layer of IO-Link. Thus, the PHY particularly refers to the physical layer of the communication protocol. It may be the first layer of the ISO-OSI reference model, which provides the mechanical, electrical, functional, and procedural means to active, maintain, and de-activate physical connections for bit transmission between data-link entities. It may be responsible for the transmission of the electrical signals over the physical medium, such as wires or cables, between the IO-Link master and the IO-Link device. The PHY layer may define the electrical characteristics of the communication, such as the voltage levels, signal timing, and signal encoding, and ensures reliable and accurate data transmission.

The physical layer may make use of a 3-wire connection system, wherein the three lines are used as follows: one for the power supply, one for the ground line, and one (C/Q) for the switching signal or SDCI (Single-drop digital communication interface) communication. The physical layer is responsible for configuring the C/Q line and associated line driver and receiver for a specific port.

It is possible that the processing unit is configured to carry out the adjustment, particularly aggregation and/or consolidation, of the data, particularly by combining the data exchanged with the secondary devices and/or by transforming the combined data into or from an aggregated dataset for sending or receiving the aggregated dataset to or from the master device via the device port and via the one port. This allows to provide the exchange of the data between the secondary devices and the master device.

The apparatus may (therefore) be configured as an aggregator device, particularly IO-link aggregator device, and/or as an intermediary. The apparatus may particularly be configured to carry out each data communication as a wired, point-to-point IO-Link-communication.

It is possible that the apparatus provides a configurable logic adapter that processes, preferably converts and/or selects, data elements of the data received from the secondary devices and processes and/or combines the data elements to generate the data to be sent to the master device. The configurable logic adapter may be realized by a software and/or an electronic circuit that provides a configurable logic. In other words, the processing unit may be configured to perform logic operations on the data, wherein the logic operations are configurable, particularly dynamically during an operation of the apparatus, e. g. using an interface as described below.

It is also possible that the apparatus according to the invention comprises an interface, the interface being provided to configure the configurable logic adapter by a user, thereby adapting the processing of the data elements, particularly a routing of the data. The configuration may take place dynamically during an operation of the apparatus, i.e., without a reprogramming of the processing unit. In other words, the processing unit may be programmed in a way that it can be configured for performing different logic operations. This allows to flexible adapt the functionality of the apparatus according to the invention.

It is possible that the apparatus provides a configurable logic adapter that processes the data. Alternatively, or additionally, the processing of the data may comprise a routing of incoming to outgoing data. The outgoing data is preferably generated by a combination and/or processing of the incoming data. This may allow to provide at least one or multiple feedback loops from sensors to actuators, preferably without interaction of an upper-level unit, particularly external programmable logic controller. The incoming data may be received from one or multiple of the master ports of the apparatus. The incoming data therefore originates from the multiple secondary devices. Furthermore, also the outgoing data may be data that is sent to one or multiple of the master ports of the apparatus. In other words, the generation of the outgoing data may take place without processing incoming data from the device port of the apparatus (that therefore originates from the master device), allowing to provide a feedback loop between secondary devices like sensors and actuators.

It is possible that the apparatus is configured to be used in an automation system, particularly industrial automation system. Furthermore, the apparatus may be configured to be connected via the master device with an upper-level unit like a programmable logic controller. A configuration of the configurable logic adapter may be based on a programming of the programmable logic controller. The configurable logic adapter may therefore provide at least one task of the programming. This allows to implement a part of the programming of the automation system in the apparatus.

It is possible that the apparatus comprises at least four or at least six master ports and/or a maximum of 10 master ports or 20 master ports, each configured for connecting to a respective secondary device, the master ports particularly being configured for connecting to different types of secondary devices like sensors and actuators.

Another aspect of the invention is a system for providing a communication in an automation system, particularly in an industrial automation system. The system according to the invention may comprise an upper-level unit like a programmable logic controller for providing an automated control of industrial processes of the automation system. Furthermore, the system may comprise a master device for being connected to the programmable logic controller for providing a communication system, particularly via a fieldbus. Also, at least two secondary devices may be provided for being controlled and/or evaluated by the programmable logic controller via the master device, thereby carrying out the industrial processes at least partially. Advantageously, an apparatus according to the invention may be also part of the system according to the invention for connecting the at least two secondary devices to one port of the master device, thereby providing a data exchange for the control and/or evaluation of the secondary devices via the communication system. Thus, the system according to the invention brings the same advantages as have been described in detail with reference to the apparatus according to the invention.

Another aspect of the invention is a method for connecting at least two secondary devices to one port of a master device via an apparatus, particularly an apparatus according to the invention, wherein the method comprising the following steps, particularly carried out by the apparatus and/or the system according to the invention:

- Receiving data from the secondary devices via at least two master ports of the apparatus, the at least two master ports being configured to connect to the secondary devices, particularly by wire,

- Processing the received data for a point-to-point communication of the apparatus with the master device,

- Providing modified data based on the processing, the modified data being specific for the data received from each of the secondary devices,

- Sending the modified data to the master device via a device port of the apparatus, the device port being configured to connect to the one port of the master device, particularly by wire.

Thus, the method according to the invention brings the same advantages as have been described in detail with reference to the apparatus according to the invention.

It is possible that the master device comprises further remaining ports in addition to the one port, and in case the remaining ports of the master device are occupied, the master ports of the apparatus provide an extension of the ports of the master device, thereby particularly connecting the secondary devices to the master device. This allows to add additional secondary devices, especially if additional sensors or actuators need to be added for extended or improved functionality and all ports of the current IO-Link master are occupied and adding a new master is not sufficient.

It is possible that an automation system with a programmable logic controller is provided, and the secondary devices comprise at least one replacement device. The programmable logic controller may, however, be configured to evaluate a replaced device that has been replaced by the replacement device. The following steps may then be carried out to maintain functionality:

- Adapting a data structure of the data received from the replacement device to match a data structure of the replaced device,

- Providing the modified data based on the adapted data structure,

- Sending the modified data to the master device via the device port, thereby providing the adapted data structure to the master device, so that particularly the modified data appears to the master device as data of the replaced device.

This is especially useful if a given device needs to be replaced by a similar one with similar or comparable features but different cyclic data structure.

It is possible that the following steps are carried out by the apparatus for providing a feedback loop, particularly to provide a low latency feedback from a sensor to an actuator and/or to provide a faster reaction compared to a control of at least one of the secondary devices by an upper-level unit:

- Evaluating data received from at least one of the secondary devices,

- Generating a response based on the evaluation,

- Sending the generated response to the at least one or another one of the secondary devices.

This e.g., allows to meet a requirement of low latency feedback from a sensor to an actuator, especially in configurations where no PLCs are used as clients.

Furthermore, the processing may allow to preprocess data received from the secondary devices for a further use by at least one upper-level unit. This may be useful for clients of the IO-Link system that requires data in a specific possibly preprocessed format that is not in line with the data format provided by the connected secondary device. The processing may comprise a data compression and/or a filtering of the data elements that are essential for the processing by an upper-level unit.

It is also possible that the data, particularly process data, received from the secondary devices is selected to be mapped to the master device, wherein particularly the mapping of the data is carried out by the following steps:

- Selecting data elements of the data,

- Combining the selected data elements to form a predefined process data structure for the master device.

It is also possible that the processing of the data comprises a calculation on the data that is carried out by the apparatus to perform a substantive processing of the data and preferably to implement, particularly outsource, a processing partly from an upper-level unit like a programmable logic controller of an automation system to the apparatus.

It is also possible that the apparatus according to the invention comprise a Signal generator enables sequence control. Therefore, the signal generator is useful since the sequence control usually cannot be realized by the input signals of the secondary devices.

It is possible that the apparatus provides, particularly generates, one secondary device at the device port for the master device, wherein particularly the processing of the data is carried out by the apparatus to convert the data exchanged with each of the secondary devices to data from the generated one secondary device, the converted data being particularly sent as the modified data to the master device.

In another aspect of the invention a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

The computer may be a data processing device which executes the computer program. The computer may include at least one processor that can be used to execute the computer program. Also, a non-volatile data memory may be provided in which the computer program may be stored and from which the computer program may be read by the processor for being carried out.

According to another aspect of the invention, a computer-readable storage medium may be provided which comprises the computer program according to the invention. The storage medium may be formed as a data storage device such as a hard disk and/or a non-volatile memory and/or a memory card and/or a solid-state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this connection, the features mentioned in the claims and in the description may each be essential to the invention individually or in any combination. Showing:

Fig. 1          Parts of an apparatus according to embodiments of the invention.

Fig. 2          Further parts of an apparatus according to embodiments of the invention.

Fig. 3          A visualization of a method according to embodiments of the invention.

Fig. 4          An example of an IO-Link process data structure.

Fig. 5-13       Further visualizations of a method according to embodiments of the invention and of an apparatus according to the invention.

Fig. 14         A method, a computer program, a processing apparatus as well as a storage medium according to embodiments of the invention.

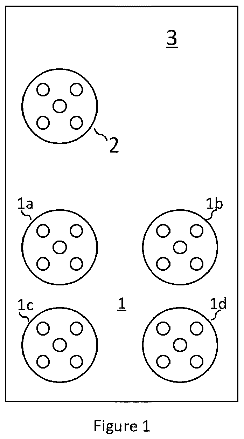

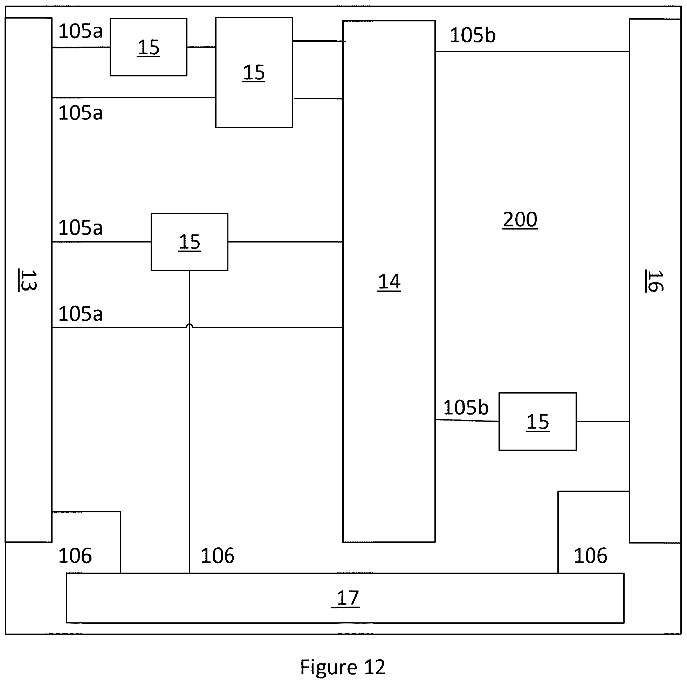

Fig. 1-14 visualize embodiments of the invention. An apparatus 3 according to the embodiments of the invention may be used for connecting at least two secondary devices 8a-d to one port 7a of a master device 7. The apparatus 3 may be configured as an IO-Link-capable-device for being interposed between the secondary devices 8a-d and the master device 7. The secondary devices 8a-d as well as the master device 7 may also be configured as IO-Link-capable devices. To enable the connection, the apparatus 3 may provide ports for the master device 7 and the secondary devices 8a-d. The apparatus 3 may comprise a, particularly only one, device port 2 that is configured to connect to the, particularly only, one (single) port of the master device 7, and at least two master ports 1a-d that can be used to connect to the secondary devices 8a-d. The connections may be configured as wired connections.

The apparatus 3 according to embodiments of the invention may further comprise a processing unit 5, e.g., a microprocessor and/or a data processing apparatus according to embodiments of the invention or the like. The processing unit 5 may be configured to establish a data communication with the master device 7 via the device port 2 and via the one port 7a. It may also be configured to establish a data communication with the secondary devices 8a-d via the at least two master ports 1a-1d. For example, secondary device 8a may be connected to master port 1a, secondary device 8b to master port 1b, and so on. Thereby, the apparatus 3 can provide an exchange of data between the secondary devices 8a-d and the (particularly single) master device 7 via the apparatus 3 with each data communication particularly being configured as a point-to-point communication. The processing unit 5 may further be configured to adjust, preferably aggregate, the data exchanged with the secondary devices 8a-d for the point-to-point communication with the master device 7 via the device port 2 and via the one port 7a. The apparatus 3 may therefore be configured as an aggregator device 3, particularly IO-link aggregator device 3, and/or as an intermediary.

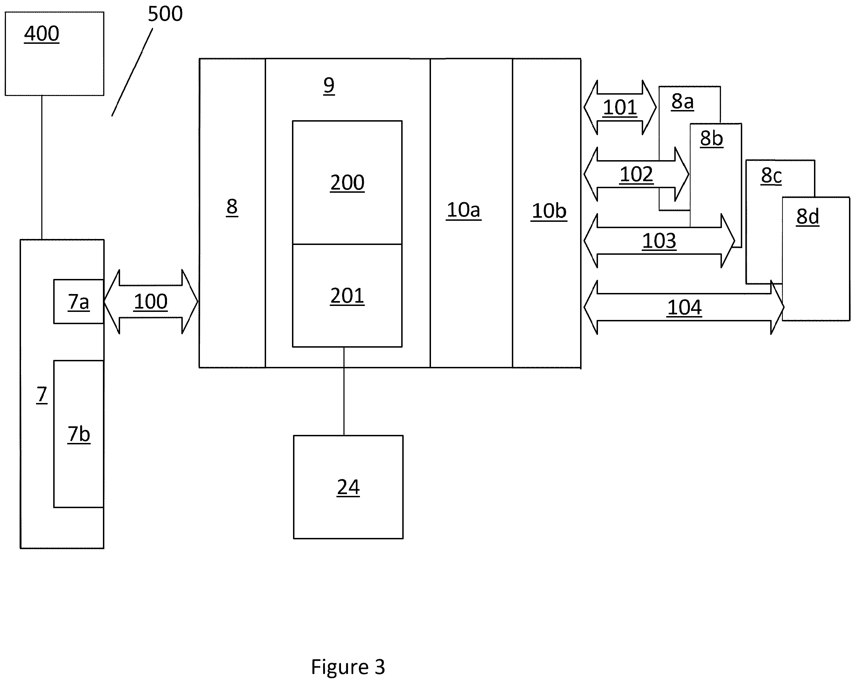

In Fig. 3, it is shown that the apparatus 3 according to embodiments of the invention may be configured to connect to a master device 7 via the link 100. The master device 7 may comprise further remaining ports 7b in addition to the one port 7a, and in case the remaining ports 7b of the master device 7 are occupied, the data-exchange over the link 100 allows the master ports 1a-d of the apparatus 3 to provide an extension of the ports 7b of the master device 7, thereby connecting the secondary devices 8a-d to the master device 7.

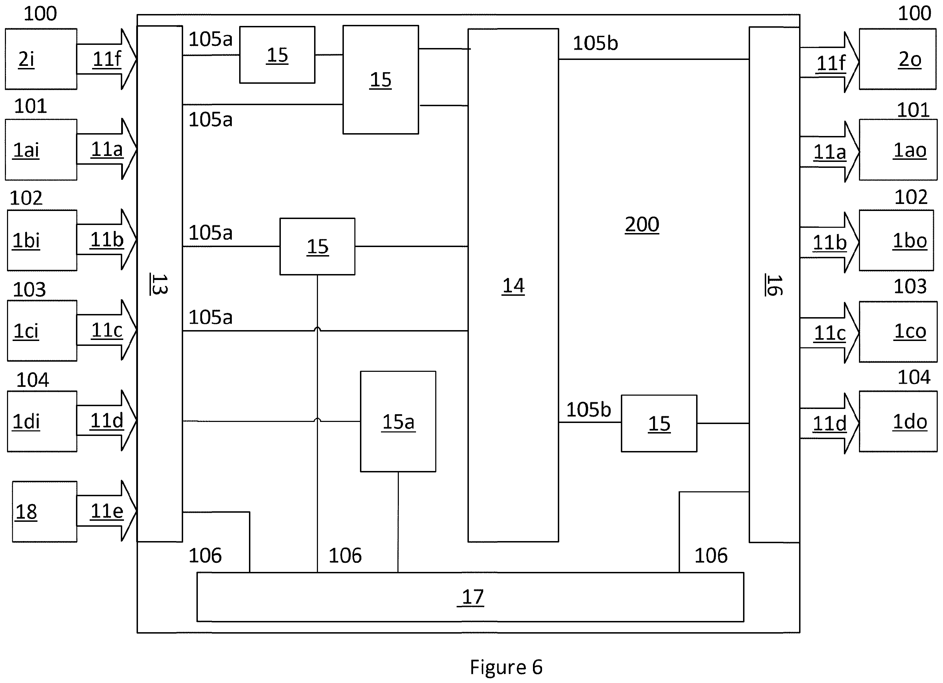

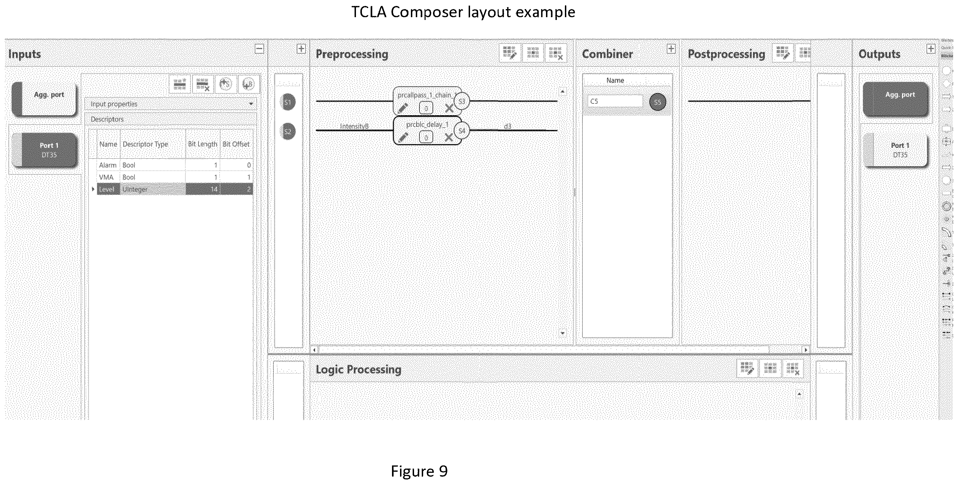

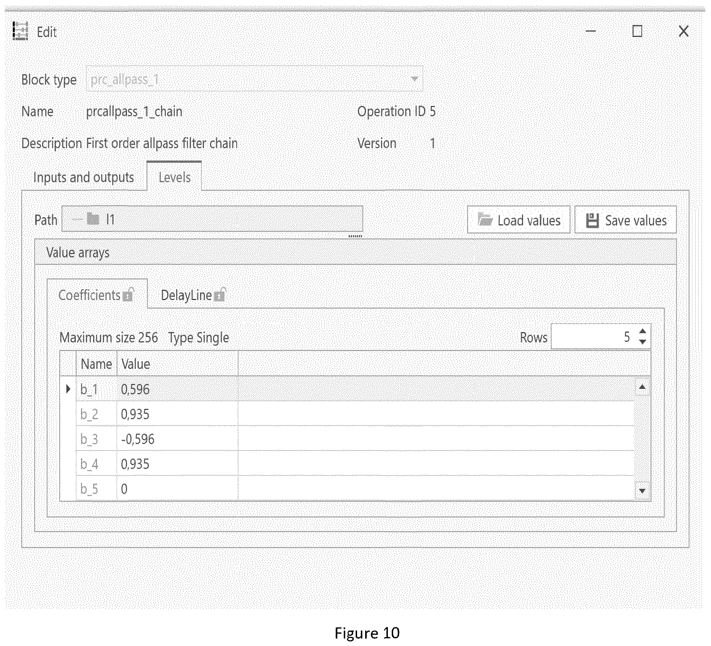

According to Fig. 6, the apparatus 3 may comprise an interface to configure a configurable logic adapter 200 by a user, thereby adapting the processing of the data elements, particularly a routing of the data. According to Fig. 9 and 10, this interface may also comprise a graphical user interface.

There a several scenarios that fail for conventional IO-Link setups. A first and simplest failing scenario is the lack of IO-Link Master ports in a given industrial set up. This scenario shows up when additional sensor or actuators need to be added for extended or improved functionality and all ports of the current IO-Link master are used and adding an additional master is inappropriate. A second failing scenario shows up, when a given device needs to be replaced by a similar one with similar or comparable features but different cyclic data structure. A third failing scenario comes from the requirement of low latency feedback from a sensor to an actuator, especially in configurations where no PLCs are used as clients. Simple sequencing is an extension to the low latency feedback which provides means for execution loops and decisions. A fourth failing scenario arises with clients of the IO-Link system that requires data in a specific possibly preprocessed format that is not in line with the data format provided by the connected IO-Link Device. These scenarios will be solved by embodiments of the invention, particularly referred to as aggregator device 'AGG' and the comprised configurable logic adapter 'CLA'.

Fig. 1 shows a schematic exemplary view of the AGG device 3 with one device port 2 that can be connected to an IO-Link master 7 and a number of master ports 1a to 1d that can be connected to IO-Link Devices 8.

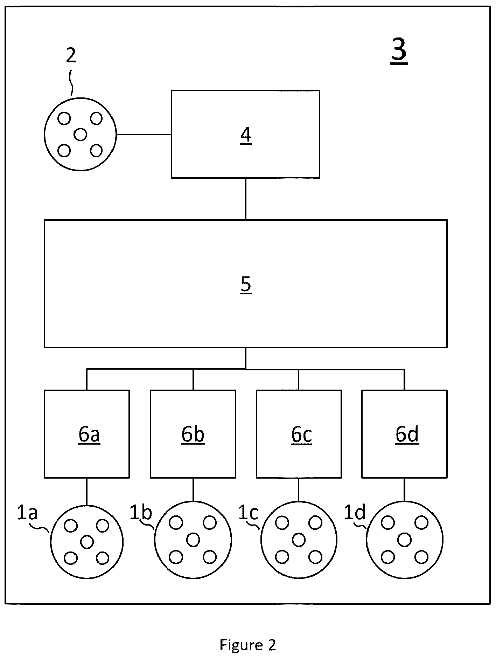

Fig. 2 shows the core components of an AGG Device according to embodiments of the invention. The Device PHY4is an electronic circuitry that converts IO-Link signals exchanged with an external IO-Link Master 7 via Device Connector 2 into signals that are compatible with the Micro Controller Unit 5 "MCU". The Micro Controller Unit executes software for data exchange with an external master 7 and it executes software to exchange data via Master PHYs6 and Master Ports 1 IO-Link Devices 8.

Fig. 3 depicts an exemplary basic structure of the software that is executed by the MCU 5. The IO-Link data exchange 100 with an external IO-Link Master is handled by the IO-Link Device Stack 8. Another software module is the IO-Link Master stack 10b that is responsible for IO-Link data exchange 101,102,103,104 with the connected IO-Link devices 8. An AGG Device Application 9 including a configurable logic adapter 200 is responsible for processing data exchanged with IO-Link device stack 8 on one side and for processing data exchanged with the IO-Link Master 10b on the other side. The data exchange with the IO-Link Master 10b uses a standardized master interface 10a called "SMI".

**Restrictions of the AGG** Device

According to embodiments of the invention, if an IO-Link master sends process data "PD" to a Device, these data are called in the IO-Link interface and system specification PDOut. If an IO-Link Master receives PD, these data are called PDIn. The total size of the Process data for an IO-Link Device is limited to 32-bytes PDOut and 32-bytes PDIn. If the direction of the data flow is not important for a consideration, the suffices In/Out are skipped in the subsequent description.

One restriction of an AGG Device according to embodiments of the invention is based on the fact that the accumulated PDIn / PDOut of 4 arbitrary IO-Link Devices 8 connected to an the AGG-Device 3 may sum up to 128-bytes in every direction. In such cases, a selection is needed that specify which process data are transferred over the IO-Link interface 100 to the external master 7. It is the another task of the AGG-Device-Application 9 to do respective selection.

According to embodiments of the invention, another restriction of the AGG-Device arises from the duration, needed to transfer a certain amount of data, serialized over the IO-Link line. In the IO-Link System and Interface specification, an expression for an estimate of this duration is given in chapter A.3.6 M-sequence time.

$$t_{M-sequence} = 11\,(m+n)T_{BIT} + t_A + t_1(m-1) + t_2(n-1)$$

Here m is the number of bytes sent from the IO-Link Master to the Device, n is the number of the Device to the IO-Link Master, $T_{BIT}$ is the duration needed to transfer one bit with $T_{BIT} = \dfrac{1}{Baudrate}$, $1\,T_{BIT} \leq t_A \leq 10\,T_{BIT}$, $0\,T_{BIT} \leq t_1 \leq 10\,T_{BIT}$ and $0\,T_{BIT} \leq t_2 \leq 3\,T_{BIT}$.

The formula shows how the time to transfer data increases with its amount. For the minimum cycle time of an IO-Link Device the following inequality $t_{cycle} > t_{M\text{-}sequence}$ must always hold.

Thus, the minimum cycle time of the AGG Device 3 might become bigger than the minimum cycle time of the connected IO-Link Devices 8 if the process data size of the AGG Device is bigger.

**Direct Process Data mapping**

As already mentioned, PDIn or PDOut have a fixed byte length for a given m-sequence type. The structure of the process data, as defined in the IODD, splits the process data into smaller elements with given data types, here called data elements.

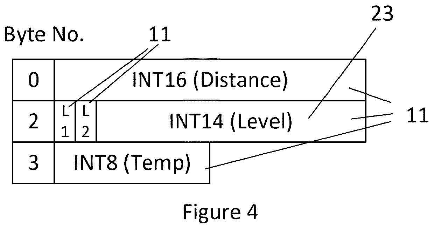

An example of a typical process data structure is given in Fig. 4. Here, a process data with a total size of 4 bytes is divided into 5 typed data elements 11: A 16-bit integer representing a distance, 2 bools representing thresholds, a 14-bit integer representing a level and an 8-bit integer representing a temperature. The data structure and the physical units of the data elements are specified in the electronic data sheet IODD of the IO-Link device.

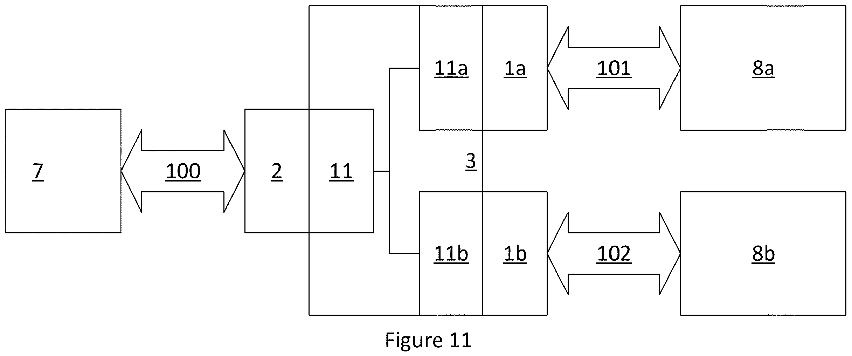

According to embodiments of the invention, the direct mapping between process data between the AGG Device Port 2 and the AGG Master Ports may be done in a 2-step approach as shown in Fig. 11 for two connected devices. In a first step, data elements 11a and 11b of the Devices 8 connected to the incoming AGG Master Ports 1a, 1b may be selected. The selection is based on the given PD structure of the connected devices as specified in the IODD. In a second step these data elements may be combined to form the process data structure of the AGG Device Port 2 as combination 11 of selected data elements 11a and 11b. The combination of data elements is specified with the help of a configuration tool that allows to combine PD elements in a flexible way.

Direct mapping of process data, however, may provide only a solution for the first scenario - port extension.

**Configurable Logic adapter**

According to embodiments of the invention, other scenarios require a more complex device application that allows routing and processing of the process data. A practical solution for this task poses considerable challenges because it must fulfill certain requirement to be generally applicable in automation systems. These requirements are:
The device application shall be usable for arbitrary IO-Link devices 8 connected to the master ports 1.

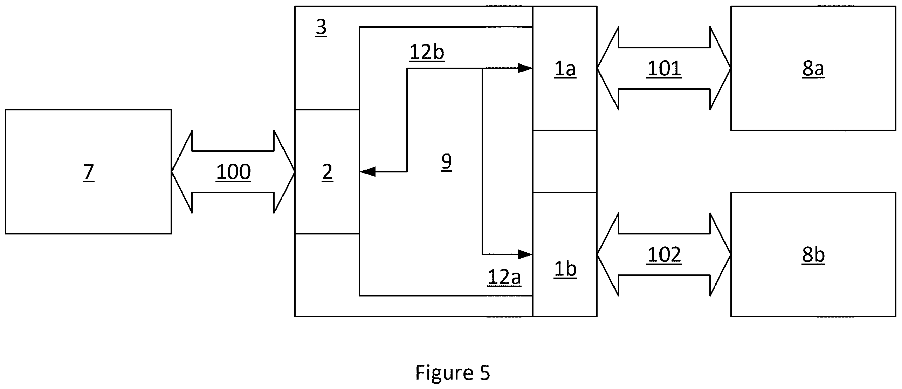

The device application 9 shall allow routing of process data elements 11 between one IO-Link device and other IO-Link Device 12a and between IO-Link Devices and the external master 12b as shown in Fig. 5.

Configurable Logic Adapter **CLA**

Embodiments of the invention provide a new solution to these requirements with a structure, called in this context configurable logic adapter "CLA" 200, which can be part of the device application 9 is shown in Fig. 6. The CLA is based on a fixed structure. Only a configuration is needed to resolve the required scenarios. In particular it is not needed to change software. Thus, the CLA can be qualified once for its basic functionality and stability because a reconfiguration of the CLA will not affect basic properties of the CLA like stability or integrity.

**CLA data types**

According to embodiments of the invention, the CLA uses only two data types, called scalars 105 and bools 106 which are handled differently. Scalars may be used to transfer numerical process data in a generic way. Thus, their value range should be sufficiently large to handle all numerical process data without significant loss of accuracy. In preferred realization of the CLA the data type FLOAT32 "float" according to IEEE754 is used. However other data types like DOUBLE would also fulfill these requirements.

According to embodiments of the invention, the conversion of process data elements 11 into scalars changes their types into float. The conversion into scalars or bools may only be applicable for process data element types: BooleanT, UIntegerT, IntegerT and Float32T (see A.1.4 of the IO-Link Interface and System specification). The remaining types (TimeT, TimeSpanT, StringT and OctetStringT) can particularly only be used for the previously mentioned direct mapping and are not handled by the CLA.

Logical values 106 may be represented by two states "True" and "False". In a preferred realization of the CLA these states are mapped to a byte with the byte value 0 mapped to False and any other byte value mapped to "True". Both data types may be used to transfer numerical information within the CLA.

**CLA blocks**

According to embodiments of the invention, CLA blocks can have scalars or bools as input data and produce new scalars or bools as output data. The process of generating the output data may be defined by an algorithm that executes a finite number of steps. The execution of the steps may be triggered by an event called "block cycle" in this context.
With a main cycle "cycle" all the block cycles for all CLA blocks may be executed in a well-defined configured order at a specific point in time.
In a preferred embodiment of this invention, the order of execution is chosen in a way that any scalar that is input of a current block must be evaluated prior to the execution of the current block. The initial input scalars from the data elements are all sampled at this main cycle which is the beginning of the cycle.
In a preferred embodiment of this invention there are 6 types of blocks defined.

(1) Distributor blocks 13 are characterized by taking process data elements as input and generating scalars or bools as output.

(2) Processing blocks 15 are characterized by take scalar or bools as input and generate scalars or bools. In a preferred embodiment of this invention, processing blocks must have identical number of incoming and outgoing scalars.

(3) Binarizer blocks 15a are special processing blocks characterized in having at least one input scalar, no output scalars and at least one bool output.

(4) Logic blocks 17 that have only bools as input or output.

(5) Combiners 14 that are characterized in having multiple input scalars but only one output scalar.

(6) Merger blocks 16 are characterized by having one input scalar that may be routed to various outgoing process data elements.

(7) Signal generators 18 that are generating simple signals cyclically within being connected to an IO-Link signal.

**CLA operation**

According to embodiments of the invention, process data sources are considered as data inputs devices 2i, 1ai, 1bi, 1ci, 1di and 18 and shown on the left side of Fig. 6. Incoming process data elements are selected and converted by the distributor block 13 into scalars or bools. Details on selection and conversion are configurable.
In a preferred embodiment of the CLA, the conversion from data elements into scalars is adapted by a scale factor and an offset. For example, an IntegerT type is converted to a scalar by an operation that realized the following equation:

$$Scalar_i = scale * float(IntegerT) + offset$$

According to embodiments of the invention, the conversion from a data element to bools requires a quantization step if the data element is not of the type of bool. The quantization step may be done by an operation that realizes the following inequality:

$$bool = (data\ element \geq threshold)$$

Scalars and bools may be handled differently in the configurable logic adapter.

**Signal Generators**

To support simple sequencing logic, according to embodiments of the invention, an artificial Device Port 18 can be added to the AGG Device that generates some simple value sequences like a counter. The counter output can be used generate control signals, needed for the sequencing logic.

**Handling of Scalars**

According to embodiments of the invention, input scalars 105a may be routed from the distributor 13 to the combiner block 14. It is possible to insert processing blocks 15 into the route. In a preferred embodiment of this invention the number of scalars that are input to a processing block is identical to the number of scalars that are output of a processing block. Processing blocks between distributor and combiner are also referred to as pre-processing blocks.

Output scalars 105b may be routed from the combiner 14 to the merger 16. It is possible to insert processing blocks 15 into the into the route. Processing blocks between combiner are merger are referred to as post-processing blocks.

The operation of a processing block may be specified by a procedure that executes operations on the input scalars to generate output scalars. A processing block may contain state memory. A typical example of a processing block with one input scalar and one output scalar is a moving averaging block that generates the average of the last N input samples as output sample.

A processing block with 2 input scalars may be a coordinate conversion block that converts from cartesian coordinates (x, y) into polar coordinates (amplitude and phase). But also processing blocks that require configurable coefficients may be supported, like a finite impulse response "FIR" filter block, that executes an operation as defined in the equation $y(n) = \sum_{i=0}^{N-1} h(i)x(n-i)$, where x(n) represents the input scalar, y(n) the output scalar and h(i)are the filter coefficients.

It is an important characteristic of embodiments of this invention, that scalars cannot be used to generate a direct feedback loop within the CLA.

**Combiner 14**

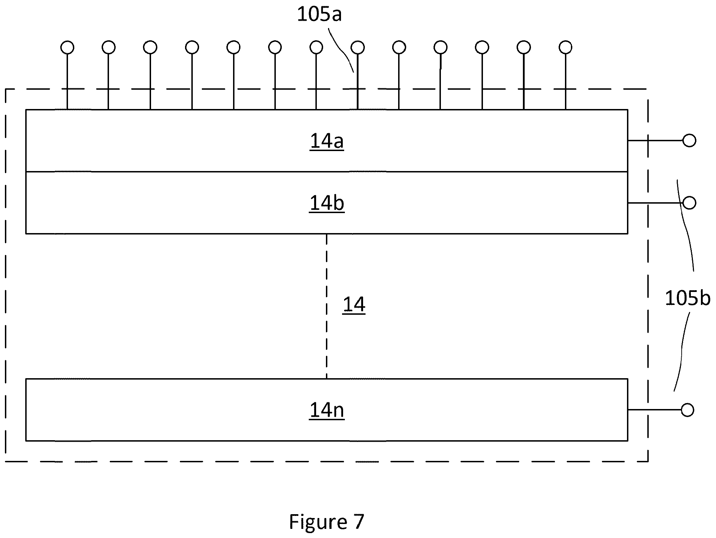

Fig. 7 depicts an exemplary structure of the combiner block 14. The combiner block is organized in rows. Every row can combine arbitrary input scalars and generates one output scalar. The number of rows 14a ... 14n of the combiner block is configurable.

Preferred embodiments of the combiner operation are described by the following equations:

$$so(j) = \sum_{i=0}^{I-1} c(i) * si(i)^{m(i)} + o(i)$$

$$so(j) = o(j) + c(j) \prod_{i=0}^{I-1} si(i)^{m(i)}$$

A first preferred embodiment allows a linear combination of all input scalars. If for example, if input scalar si(0) represents a first distance measured by Device 8a and scalar si(1) represents a 2nd distance measured by another Device 8b, a simple linear combination with $I = 2, c(i) = 1$, m(i) = 1 and $o(i) = 0$ will lead to an operation, that evaluates the sum of both distances so(j) = si(0) + si(1).

The second preferred embodiment is bound to the product of input scalars. If for example, if input scalar si(0) represents a current I measured by device 8a and if scalar si(1) represents a Voltage U measured by device 8b, the product term with o(j) = 0, c(j) = 1, m(i) = 1 will lead to an operation that evaluates an electrical power as product of both scalars so(j) = si(0) * si(1) = U * I.

**Merger 16**

Finally, according to embodiments of the invention, the merger block 16 may be used to reconvert scalars and bools back into data elements 11a ... 11f. The merging process may require a quantization step. In order to convert a scalar into a data element in a preferred embodiment of the invention, a linear operation may be applied to the output scalar so(j).

$$DataElement = Limit(Integer((so(j) * scale + offset))$$

The scale factor and to offset are configurable to provide appropriate matching of the output scalar value range to the limited data range of the data element. For an 8-bit integer, all float values smaller than -128 would be mapped to -128 and all float values > 127 would be mapped to 127. The non-integer part of the float value will be discarded.

The outgoing merged data elements 11a ... 11f may be send to the output ports 2o, 1ao, 1bo, 1co 1do. The output port 2o and the input port 2i may be physically realized as the AGG Device port 2. The output port 1ao and the corresponding input port 1ai may be physically realized by the same master port 1a and so forth.

## Handling of Bools

According to embodiments of the invention, bools may be arbitrarily routed from input data elements to output data elements. The order of processing bools may not be specified. Every block that uses a bool value will use the value that is stored prior to the execution of the block. A result of a Boolean operation is stored and made accessible to other blocks for the next cycle.

Thus, every bool may contain a delay. This allows the realization of feedback with Bools without generating instable recursions. A conversion from scalar to bools can be done by binarizer blocks 15a.

## Configuration of the CLA

According to embodiments of the invention, the requirement to have a simple configuration of the CLA without the need for programming and with consideration of the limited resources of the AGG hardware may be realized as follows. The set-up of the device application shall be simple and shall not include any programming and it shall consider available memory resources of the AGG Device hardware. The device application shall be flexible and there shall be means for extensions to meet future requirements. The requirements for the CLA can easily be resolved if the operations that shall be executed by the CLA are realized by a software program. Such a solution however requires software engineers to write an appropriate program which has to be adjusted or modified for any change and retested. Such a program will typically be written in a programming language, which is interpreted which requires interpreter software running within the CLA - and makes execution of code slow.

## Configuration Tool

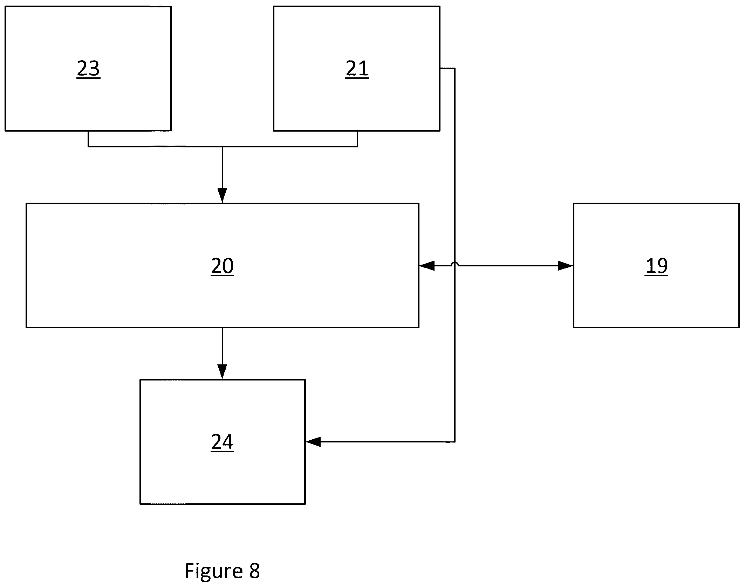

Fig. 20 shows an example how a configuration tool "CLA-Composer" 20 may be provided that can be running on a PC. The configuration tool (see Fig. 8) has a functionality to import the IODD files 23 of connected IO-Link devices. The IODD contains information of the process data elements of the connected IO-Link devices. The TCLA offers to the user also a list of processing blocks for insertion. The list of processing blocks refers to the processing blocks are available in the current AGG device. The details of the processing blocks are described in well-defined XML-files called Processing Block Descriptor "PBD" files 21.

According to embodiments of the invention, if new requirements show up, for example the need for a data transformation from the time domain, the existing processing blocks need to be extended. In this case the existing firmware of the AGG-Device may be upgraded with the new processing block by means of a firmware update.

Fig. 9 shows an example of a layout of the CLA. The process data elements 'Alarm', 'VMA' and 'Level' shown in the example under inputs are taken from the imported IODD of the connected device. The data element "Level" in the example is mapped to two Scalars "S1" and "S2". The signals are passed in the example through 2 processing blocks 'prcallpass_1_chain_1' and 'prcblc_delay_1'. The blocks can be inserted into scalar-lines by GUI components of the TCLA-composer tool.

## Configuration transfer between TCLA composer and AGG Device

According to embodiments of the invention, after the routing of Bools and Scalars is finished and all blocks are configured, the configuration needs to be transferred the AGG Device.

As the AGG Device has limited resources, especially limited memory, it is desirable to do resource checking already during the configuration phase. This is particularly achieved by generating an image of the complete volatile memory within the composer 24.

The CLA can check if the generate memory image fits into the memory area that is reserved in the AGG before the transfer is executed. The memory image may be downloaded to the AGG Device by an IO-Link feature called BLOB transfer.

The AGG Device application may contain a parser 201 the memory image 24 in order to link coefficients, storage elements etc. to the CLA 200. The parsing depends on a formal description of the memory image. An example of the element "BLOCK" is given below.

```
Block(op_id, p_version, num_scalars, num_bool_in, num_bool_out) {

    level_start

    BlockIdentification(op_id, p_version)

    Array(typeid = Scalar_ID, num_scalars, typesize = 8)

    Array(typeid = Bool_ID, num_bool_in, typesize = 4)

        Array(typeid = Bool_ID, num_bool_out, typesize = 4)

    ArrayList

    level_end

}
```

**level_start**: 0x00, 0x00, 0x20, 0x00

(increments level count)

**level_end**: BaseArray(level_end, 0, 0) = 0x00, 0x00, 0x30, 0x00

The memory image 24 of the processing blocks may be uniquely linked to the structural description of the PBD files 21. Thus, the requirement of extensibility is met, if the new processing block is described by the PBD.

In a preferred embodiment of the invention, during parsing identified parts of the memory can be reorganized (e.g., to support different ENDIANESS). In particular, elements of the memory image that do only contain data to support proper parsing, can be reused by the application after parsing by the algorithm.

**Alternative scenario of the CLA**

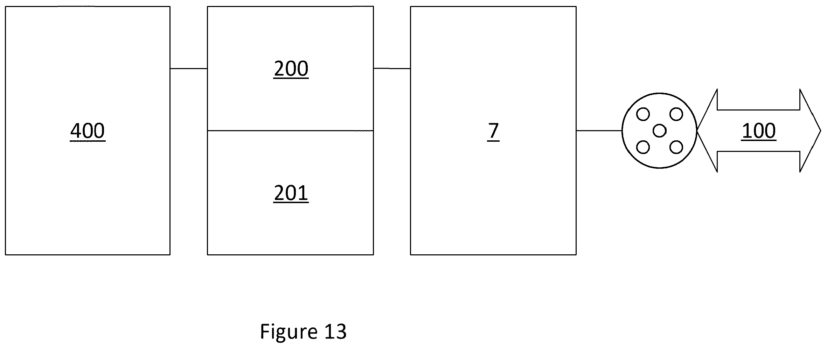

Fig. 13 shows another preferred embodiment of the CLA. The CLA 200 is now connected directly to the upper-level side of an external IO-Link master 7 that is controlling at least one IO-Link line 100. Data exchange between an upper-level system 500 which may be a PLC, a Webserver or another client of the IO-Link Master passes the CLA. The CLA may in this case be used to do signal shaping or feedback loops as described for the AGG Device.

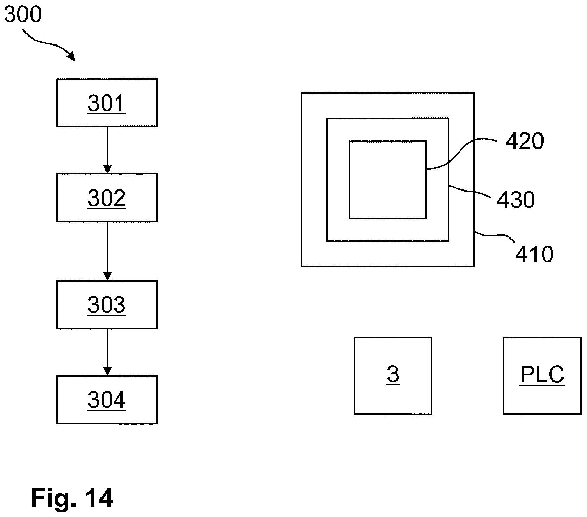

Fig. 14 visualizes a system according to embodiments of the invention for providing a communication in an automation system, with an upper-level system in the form of a programmable logic controller PLC for providing an automated control of industrial processes of the automation system, a master device 7 (shown in Fig. 2) for being connected to the programmable logic controller PLC for providing a communication system, at least two secondary devices 8a-d (shown in Fig. 2) for being controlled and/or evaluated by the programmable logic controller PLC via the master device 7, thereby carrying out the industrial processes at least partially, and the apparatus 3 according to embodiments of the invention for connecting the at least two secondary devices 8a-d to one port of the master device 7, thereby providing a data exchange for the control and/or evaluation of the secondary devices 8a-d via the communication system.

Furthermore, Fig. 14 visualizes a method 300 according to embodiments of the invention for connecting at least two secondary devices 8a-d to one port of a master device 7 via an apparatus 3, particularly according to embodiments of the invention. The method 300 may comprise as a first method step 301 a receiving of data from the secondary devices 8a-d via at least two master ports 1a-d of the apparatus 3. According to a second method step 302, the received data may be processed for a point-to-point communication of the apparatus 3 with the master device 7. According to a third method step 303, modified data may be provided based on the processing 102, the modified data being specific for the data received from each of the secondary devices 8a-d. Furthermore, the method 300 may comprise a fourth method step 304 of sending the modified data to the master device 7 via a device port 2 of the apparatus 3.

Fig. 14 also visualized a computer program 420, a data processing apparatus 410 - for example in the form of a micro controller unit 5 (see Fig. 3) - and a computer-readable storage medium 430 according to embodiments of the invention.

The foregoing explanation of the embodiments describes the present invention in the context of examples. Of course, individual features of the embodiments can be freely combined with each other, provided that this is technically reasonable, without leaving the scope of the present invention.

Reference list

| | |
|---|---|
| 1 | master ports |
| 1a | first (secondary) master port |
| 1b | second (secondary) master port |
| 1c | third (secondary) master port |
| 1d | fourth (secondary) master port |
| 1ao | output port |
| 1bo | output port |
| 1co | output port |
| 1do | output port |
| 2 | device port, device port connector, port to external Master |
| 2i | input port |
| 2o | output port |
| 1ai | input port |
| 1bi | input port |
| 1ci | input port |
| 1di | input port |
| 3 | apparatus, aggregator device, AGG |
| 4 | device PHY |
| 5 | micro controller unit, controller unit |
| 6, 6a-6d | Master PHYs |
| 7 | external IO-Link master, master device, external Master |
| 7a | port of 7 |
| 7b | remaining ports |
| 8 | IO-Link Device Stack |
| 8a,8b,8c,8d | Secondary Devices |
| 9 | AGG device application, IO-Link Devices, secondary device |
| 10a | IO-Link Master Interface "SMI", Agg Device Application |
| 10b | IO-Link Master stack |
| 11 | Data Elements of Agg Device Port |
| 11a, 11b | Data Elements of embedded Master Ports |
| 11c | data element |
| 11d | data element |
| 11e | data element |
| 11f | data element |
| 12a | feedback route |
| 12b | transfer route |
| 13 | Distributor |
| 14 | Combiner |
| 14a | Combiner row a |
| 14n | Combiner row n |
| 15 | Processing Block |
| 15a | binarizer block |
| 16 | Merger Block |
| 17 | Logic Block |
| 18 | Signal Generator |
| 19 | CLA Configuration file |
| 20 | CLA |
| 21 | IODD files |

| 22 | PBD files |
|----|-----------|
| 23 | selected data elements |
| 24 | composer |

PLC programmable logic controller

| 100 | ext. IO-Link |
|-----|--------------|
| 101 | IO-Link to Device 8a |
| 102 | IO-Link to Device 8b |
| 103 | IO-Link to Device 8c |
| 104 | IO-Link to Device 8d |
| 105 | Scalar-Signal |
| 105a | Input-Scalars |
| 105b | Output-Scalars |
| 106 | Bool-Signal |
| 200 | CLA |
| 201 | parser |
| 300 | method |
| 301-304 | method steps |
| 400 | upper level system e.g. PLC |
| 410 | apparatus for data processing |
| 420 | computer program |
| 430 | storage medium |
| 500 | communication system |

**Claims**

1. A apparatus (3) for connecting at least two secondary devices (8a-d) to one port (7a) of a master device (7), the apparatus (3) being configured as an IO-Link-capable-device for being interposed between the secondary devices (8a-d), each configured as an IO-Link device, and the master device (7), configured as an IO-Link master, the apparatus (3) comprising:

   - a device port (2), configured to connect to the one port (7a) of the master device (7), particularly by wire,
   - at least two master ports (1a-d), configured to connect to the secondary devices (8a-d), particularly by wire,
   - a processing unit (5), configured to establish a data communication with the master device (7) via the device port (2) and via the one port (7a), and to establish a data communication with the secondary devices (8a-d) via the at least two master ports (1a-d), thereby providing an exchange of data between the secondary devices (8a-d) and the master device (7) via the apparatus (3) with each data communication being configured as a point-to-point communication, wherein the processing unit (5) is configured to adjust, preferably aggregate, the data exchanged with the secondary devices (8a-d) for the point-to-point communication with the master device (7) via the device port (2) and via the one port (7a).

2. The apparatus (3) of claim 1, **characterized in that** the processing unit (5) is configured to carry out the adjustment, particularly aggregation and/or consolidation, of the data by combining the data exchanged with the secondary devices (8a-d) and/or by transforming the combined data into or from an aggregated dataset for sending or receiving the aggregated dataset to or from the master device (7) via the device port (2) and via the one port (7a), thereby providing the exchange of the data between the secondary devices (8a-d) and the master device (7), the apparatus (3) therefore being configured as an aggregator device (3), particularly IO-link aggregator device (3), and/or as an intermediary, the apparatus (3) particularly being configured to carry out each data communication as a wired, point-to-point IO-Link-communication.

3. The apparatus (3) of any one of the preceding claims, **characterized in that** the apparatus (3) provides a configurable logic adapter that processes, preferably converts and/or selects, data elements of the data received from the secondary devices (8a-d) and processes and/or combines the data elements to generate the data to be sent to the master device (7).

4. The apparatus (3) of claim 3, **characterized in that** the apparatus (3) comprises an interface, the interface being provided to configure the configurable logic adapter by a user, thereby adapting the processing of the data elements,

14

particularly a routing of the data.

5. The apparatus (3) of any one of the preceding claims, **characterized in that** the apparatus (3) provides a configurable logic adapter that processes the data, the processing of the data comprising a routing of incoming to outgoing data, the outgoing data preferably being generated by a combination and/or processing of the incoming data, thereby particularly providing at least one or multiple feedback loops from sensors to actuators, preferably without interaction of an upper-level unit (400), particularly external programmable logic controller (PLC).

6. The apparatus (3) of any one of claims 3 to 5, **characterized in that** the apparatus (3) is configured to be used in an automation system, and to be connected via the master device (7) with a programmable logic controller (PLC), a configuration of the configurable logic adapter being based on a programming of the programmable logic controller (PLC), particularly providing at least one task of the programming.

7. The apparatus (3) of any one of the preceding claims, **characterized in that** the apparatus (3) comprises at least four or at least six master ports (1-d), each configured for connecting to a respective secondary device (8a-d), the master ports (1a-d) particularly being configured for connecting to different types of secondary devices (8a-d).

8. System for providing a communication in an automation system, comprising:

   - a programmable logic controller (PLC) for providing an automated control of industrial processes of the automation system,
   - a master device (7) for being connected to the programmable logic controller (PLC) for providing a communication system (500),
   - at least two secondary devices (8a-d) for being controlled and/or evaluated by the programmable logic controller (PLC) (400) via the master device (7), thereby carrying out the industrial processes at least partially,
   - the apparatus (3) of any one of claims 1 to 7 for connecting the at least two secondary devices (8a-d) to one port (7a) of the master device (7), thereby providing a data exchange for the control and/or evaluation of the secondary devices (8a-d) via the communication system (500).

9. A method (300) for connecting at least two secondary devices (8a-d) to one port (7a) of a master device (7) via an apparatus (3), the method (100) comprising the following steps, particularly carried out by the apparatus (3) of any one of claims 1 to 7 and/or the system of claim 8:

   - Receiving (301) data from the secondary devices (8a-d) via at least two master ports (1a-d) of the apparatus (3), the at least two master ports (1a-d) being configured to connect to the secondary devices (8a-d), particularly by wire,
   - Processing (302) the received data for a point-to-point communication of the apparatus (3) with the master device (7),
   - Providing (303) modified data based on the processing (102), the modified data being specific for the data received from each of the secondary devices (8a-d),
   - Sending (304) the modified data to the master device (7) via a device port (2) of the apparatus (3), the device port (2) being configured to connect to the one port (7a) of the master device (7), particularly by wire.

10. The method (300) of claim 9, **characterized in that** the master device (7) comprises further remaining ports (7b) in addition to the one port (7a), and in case the remaining ports (7b) of the master device (7) are occupied, the master ports (1a-d) of the apparatus (3) provide an extension of the ports (7b) of the master device (7), thereby connecting the secondary devices (8a-d) to the master device (7).

11. The method (300) of claim 9 or 10, **characterized in that** an automation system (500) with an programmable logic controller (PLC) is provided, and the secondary devices (8a-d) comprise at least one replacement device (8a-d), the programmable logic controller (PLC) being configured to evaluate a replaced device that has been replaced by the replacement device (8a-d), wherein the following steps are carried out:

   - Adapting a data structure of the data received from the replacement device (8a-d) to match a data structure of the replaced device,
   - Providing the modified data based on the adapted data structure,
   - Sending the modified data to the master device (7) via the device port (2), thereby providing the adapted data structure to the master device (7), so that particularly the modified data appears to the master device (7) as data of the replaced device.

12. The method (300) of any one of claims 9 to 11, **characterized in that** the following steps are carried out by the apparatus (3) for providing a feedback loop, particularly to provide a low latency feedback from a sensor to an actuator and/or to provide a faster reaction compared to a control of at least one of the secondary devices (8a-d) by an upper-level unit (PLC):

- Evaluating data received from at least one of the secondary devices (8a-d),
- Generating a response based on the evaluation,
- Sending the generated response to the at least one or another one of the secondary devices (8a-d).

13. The method (300) of any one of claims 9 to 12, **characterized in that** the data, particularly process data, received from the secondary devices (8a-d) is selected to be mapped to the master device (7), wherein particularly the mapping of the data is carried out by the following steps:

- Selecting data elements (11) of the data,
- Combining the selected data elements () to form a predefined process data structure for the master device (7).

14. The method (300) of any one of claims 9 to 13,

**characterized in that** the processing (102) of the data comprises a calculation on the data that is carried out by the apparatus (3) to perform a substantive processing of the data and preferably to implement, particularly outsource, a processing partly from a programmable logic controller (PLC) of an automation system (500) to the apparatus (3), and/or

**characterized in that** the processing comprise a preprocessing of the data received from the secondary devices for a further use by at least one upper-level unit.

15. The method (300) of any one of claims 9 to 14, **characterized in that** apparatus (3) provides, particularly generates, one secondary device at the device port (2) for the master device (7), wherein the processing (102) of the data is carried out by the apparatus (3) to convert the data exchanged with each of the secondary devices (8a-d) to data from the generated one secondary device, the converted data being particularly sent as the modified data to the master device (7).

16. A computer program (420), comprising instructions which, when the computer program is executed by a computer, cause the computer to carry out the method of claim 9.

17. A data processing apparatus (410), comprising means for carrying out the method of claim 9.

18. A computer-readable storage medium (430), comprising instructions which, when the computer program is executed by a computer, cause the computer to carry out the method of claim 9.

Figure 1

Figure 2

EP 4 553 593 A2

Figure 3

EP 4 553 593 A2

Byte No.

| | | | |
|---|---|---|---|
| 0 | | INT16 (Distance) | |
| 2 | L1 | L2 | INT14 (Level) |
| 3 | INT8 (Temp) | | |

11

23

11

Figure 4

Figure 5

Figure 6

Figure 7

Figure 8

TCLA Composer layout example

Figure 9

**Edit** — □ ✕

Block type: prc_allpass_1

Name  prcallpass_1_chain                    Operation ID 5

Description First order allpass filter chain        Version    1

Inputs and outputs | Levels

Path  I1                                    📂 Load values   💾 Save values

Value arrays

Coefficients 🔓 | DelayLine 🔓

Maximum size 256  Type Single                         Rows      5 ▲▼

| Name | Value |  |
|------|-------|--|
| ▸ b_1 | 0,596 | ▲ |
| b_2 | 0,935 | |
| b_3 | -0,596 | |
| b_4 | 0,935 | |
| b_5 | 0 | ▼ |

Figure 10

Figure 11

Figure 12

Figure 13

**Fig. 14**